# EUROPÄISCHE PATENTSCHRIFT

(11) **EP 1 114 484 B1**
(45) Veröffentlichungstag und Bekanntmachung des Hinweises auf die Patenterteilung: **03.04.2002**
(21) Anmeldenummer: 99952294.9
(22) Anmeldetag: 05.08.1999
(51) Int. Cl.: H01M 8/02

(54) **HOCHTEMPERATUR-BRENNSTOFFZELLE MIT NICKELNETZ UND HOCHTEMPERATUR- BRENNSTOFFZELLENSTAPEL MIT EINER SOLCHEN ZELLE**
HIGH-TEMPERATURE FUEL CELL WITH A NICKEL NETWORK ON THE ANODE SIDE AND HIGH-TEMPERATURE FUEL CELL STACK HAVING SAID CELL
PILE A COMBUSTIBLE HAUTE TEMPERATURE POURVUE D'UN RESEAU DE NICKEL, ET EMPILEMENT DE PILES A COMBUSTIBLE HAUTE TEMPERATURE COMPORTANT DE TELLES PILES

(30) Priorität: 11.08.1998 DE 19836352
(43) Veröffentlichungstag der Anmeldung: 11.07.2001
(73) Patentinhaber: SIEMENS AKTIENGESELLSCHAFT, 80333 München (DE)
(72) Erfinder: WOHLFART, Manfred, D-91369 Wiesenthau (DE); THIERFELDER, Wolfgang, D-90411 Nürnberg (DE)
(86) Internationale Anmeldenummer: DE9902436
(87) Internationale Veröffentlichungsnummer: WO0010214

(56) Entgegenhaltungen:
- EP-A- 0 424 732
- WO-A-97/35349
- DE-A- 4 016 157
- DE-A- 19 517 451
- DE-A- 19 650 704
- DE-C- 19 649 457
- PATENT ABSTRACTS OF JAPAN vol. 017, no. 319 (E-1383), 17. Juni 1993 (1993-06-17) & JP 05 036425 A (TOKYO ELECTRIC POWER CO INC:THE), 12. Februar 1993 (1993-02-12)

## Beschreibung

Die Erfindung bezieht sich auf eine Hochtemperatur-Brennstoffzelle, bei der zwischen einer bipolaren Platte auf der Brenngasseite und einem Feststoff-Elektrolyten ein Nickelnetz angeordnet ist. Sie bezieht sich weiterhin auf einen Hochtemperatur-Brennstoffzellenstapel, der eine Anzahl solcher Hochtemperatur-Brennstoffzellen enthält.

Es ist bekannt, daß bei der Elektrolyse von Wasser die Wassermoleküle durch elektrischen Strom in Wasserstoff (H₂) und Sauerstoff (O₂) zerlegt werden. In einer Brennstoffzelle läuft dieser Vorgang in umgekehrter Richtung ab. Durch die elektrochemische Verbindung von Wasserstoff (H₂) und Sauerstoff (O₂) zu Wasser entsteht elektrischer Strom mit hohem Wirkungsgrad: Wenn als Brenngas reiner Wasserstoff (H₂) eingesetzt wird, geschieht dies ohne Emission von Schadstoffen und Kohlendioxid (CO₂). Auch mit einem technischen Brenngas, beispielsweise Erdgas oder Kohlegas, und mit Luft (die zusätzlich mit Sauerstoff (O₂) angereichert sein kann) anstelle von reinem Sauerstoff (O₂) erzeugt eine Brennstoffzelle deutlich weniger Schadstoffe und weniger Kohlendioxid (CO₂) als andere Energieerzeuger, die mit fossilen Energieträgern arbeiten. Die technische Umsetzung des Prinzips der Brennstoffzelle hat zu unterschiedlichen Lösungen, und zwar mit verschiedenartigen Elektrolyten und mit Betriebstemperaturen zwischen 80 °C und 1000 °C, geführt.

In Abhängigkeit von ihrer Betriebstemperatur werden die Brennstoffzellen in Nieder-, Mittel- und Hochtemperatur-Brennstoffzellen eingeteilt, die sich wiederum durch verschiedene technische Ausführungsformen unterscheiden.

Bei dem aus einer Vielzahl von Hochtemperatur-Brennstoffzellen sich zusammensetzenden Hochtemperatur-Brennstoffzellenstapel (in der Fachliteratur wird ein Brennstoffzellenstapel auch "Stack" genannt) liegen unter einer oberen Verbundleiterplatte, welche den Hochtemperatur-Brennstoffzellenstapel abdeckt, der Reihenfolge nach wenigstens eine Verbundleiterplatte eine Schutzschicht, eine Kontaktschicht, eine Elektrolyt-Elektroden-Einheit, eine weitere Kontaktschicht, eine weitere Verbundleiterplatte, usw.

Die Elektrolyt-Elektroden-Einheit umfaßt dabei zwei Elektroden und einen zwischen den beiden Elektroden angeordneten, als Membran ausgeführten Festkörperelektrolyten. Dabei bildet jeweils eine zwischen benachbarten Verbundleiterplatten liegende Elektrolyt-Elektroden-Einheit mit den beidseitig an der Elektrolyt-Elektroden-Einheit unmittelbar anliegenden Kontaktschichten eine Hochtemperatur-Brennstoffzelle, zu der auch noch die an den Kontaktschichten anliegenden Seiten jeder der beiden Verbundleiterplatten gehören. Dieser Typ und weitere Brennstoffzellen-Typen sind beispielsweise aus dem "Fuel Cell Handbook" von A. J. Appleby und F. R. Foulkes, 1989, Seiten 440 bis 454, bekannt.

Eine Hochtemperatur-Brennstoffzelle der eingangs genannten Art, bei der ein Nickelnetz zwischen der anodenseitig gelegenen bipolaren Platte und dem Feststoff-Elektrolyten angeordnet ist, ist als Produkt ausgeführt worden und belspielsweise in der DE 4 016 157 A1 beschrieben. Das Nickel kann dabei als Nickelnetzpaket ausgeführt sein, das ein dünneres Kontaktnetz und ein dickeres Tragnetz besitzt.

Bei einer solchen Hochtemperatur-Brennstoffzelle wurde bisher eine direkte Kontaktierung zwischen dem Nickelnetz (oder Nikkelnetzpaket) auf der einen Seite und der bipolaren Platte (Interkonnektorplatte) aus CrFe5Y₂O₃l auf der anderen Seite gewählt. Versuche haben nun gezeigt, daß sich auf der Brenngasseite schon nach kurzer Betriebsdauer ein erhöhter Serienwiderstand einstellt. Dieses besagte Nickelnetz dient auf der Brenngasseite (Anodenseite) der Hochtemperatur-Brennstoffzelle als Kontaktierung zwischen der bipolaren Platte und dem Feststoff-Elektrolyten. Die Versuche haben nun ergeben, daß bei der direkten Verbindung zwischen dem Nickelnetz und der Interkonnektorplatte schon nach kurzer Zeit eine Zwischenoxidschicht auftritt, die sich im wesentlichen aus Chromoxid zusammensetzt. Da diese Chromoxid-Schicht einen höheren Widerstand als die eingesetzten Metalle besitzt, wird der Anstieg des Serienwiderstands diesem Oxidationsprodukt zugeschrieben. Die elektrische Leitfähigkeit wird dadurch negativ beeinflußt. Die Bildung des Chromoxids erfolgt bei Sauerstoffpartialdrücken von weniger als 10⁻¹⁸ bar. Diese Sauerstoffpartialdrücke sind während des Betriebs der Hochtemperatur-Brennstoffzelle in der Regel immer vorhanden.

Genauere Untersuchungen haben folgendes ergeben: Bisher wurde das Nickelnetz mittels Punktschweißens an der bipolaren Platte angepanktet. Die Schweißpunkte und auch die Kontaktpunkte werden während des Betriebs vom Chromoxid sozusagen unterwandert. Es liegt somit eine schlecht leitende Oxidschicht zwischen dem Nickelnetz und der Interkonnektorplatte aus CrFe5Y₂O₃1 vor.

Aufgabe der Erfindung ist es, eine Hochtemperatur-Brennstoffzelle der eingangs genannten Art derart zu verbessern, daß der erhöhte Serienwiderstand vermieden und eine hohe Leitfähigkeit auch über längere Zeit sichergestellt ist.

Der Erfindung liegt weiterhin die Aufgabe zugrunde, einen Hochtemperatur-Brennstoffzellenstapel mit mindestens einer solchen Brennstoffzelle anzugeben.

Die Erfindung beruht auf der Überlegung, daß dieses erreicht werden kann, wenn die Bildung der besagten Chromoxid-Schicht zumindest weitgehend vermieden werden kann.

Die erstgenannte Aufgabe wird bei der eingangs genannten Hochtemperatur-Brennstoffzelle erfindungsgemäß dadurch gelöst, daß die bipolare Platte aus CrFe5Y₂O₃1 auf der Brenngasseite mit einer Nickelschicht versehen ist, und daß das Nickelnetz auf dieser Nickelschicht mittels eines Punktschweißverfahrens elektrisch leitend befestigt ist.

Auch hier kann das Nickelnetz ein Nickelnetzpaket aus einem dünneren Nickel-Kontaktnetz und einem dickeren Nickel-Tragnetz sein.

Weitere bevorzugte Ausführungsformen sind in den Unteransprüchen gekennzeichnet.

Bezüglich des Hochtemperatur-Brennstoffzellenstapels wird die genannte Aufgabe erfindungsgemäß dadurch gelöst, daß der Stapel eine Vielzahl übereinander angeordneter Verbundleiterplatten mit dazwischen liegenden Elektrolyten aufweist, wobei jeweils zwei benachbarte Verbundleiterplatten eine Hochtemperatur-Brennstoffzelle der vorstehend genannten Art bilden.

Durch eine dünne Nickelschicht auf der bipolaren Platte (Interkonnektorplatte) wird eine bessere Anhaftung des Nikkelnetzes erreicht. Die beiden Materialien von Nickelnetz und Nickelschicht besitzen ähnliche Zusammensetzungen und zeigen somit eine sehr gute Verbindungsqualität. Beim Betrieb der Hochtemperatur-Brennstoffzelle erfolgt praktisch keine Unterwanderung der Schweiß- und Kontaktpunkte des Netzes mit einer Chromoxid-Schicht. Die anfängliche Leitfähigkeit des Verbunds bipolare Platte-Nickelschicht-Nickelnetz bleibt praktisch innerhalb der gesamten Betriebsdauer erhalten.

Die Beschichtung der bipolaren Platte mit einer dünnen Nikkelschicht kann nach kostengünstigen Verfahren durchgeführt werden. Der Vorgang kann z.B. durch chemische oder galvanische Abscheidung erfolgen. Die Schichtdicke sollte dabei etwa 20 µm betragen. Und die Brenngasseite der bipolaren Platte sollte im Netzbereich vollflächig mit Nickel bedeckt sein.

Die Kontaktierung des Nickelnetzes mit der bipolaren Platte kann mit herkömmlichen Punktschweißverfahren durchgeführt werden.

Eine Untersuchung von Proben mit einer erfindungsgemäß Nikkelschicht ergab auch bei der Simulation des "Anfahrens" von Stack-Versuchen an stehender Luft eine beständige Kontaktverbindung des Nickelnetzes mit dem beschichteten CrFe5Y₂O₃1-Material. Die Verbindung ist metallischer Natur. Die Bildung einer Zwischenschicht aus Chromoxid (Cr₂O₃) war bei den Proben nicht zu erkennen.

Als besonderer Vorteil wird es angesehen, daß die elektrische Leitfähigkeit der Kontakte bipolare Platte-Nickelschicht-Nikkelnetz praktisch über die gesamte Betriebsdauer der Hochtemperatur-Brennstoffzelle beibehalten wird.

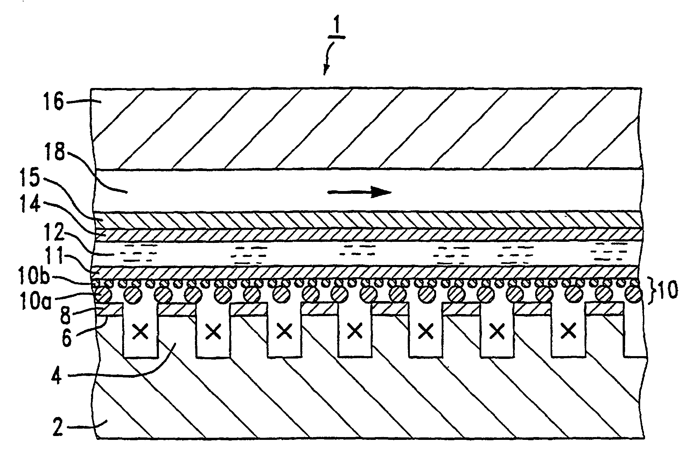

Ein Ausführungsbeispiel der Erfindung wird im folgenden anhand einer Figur näher erläutert. Die Figur stellt einen Ausschnitt aus einer Hochtemperatur-Brennstoffzelle 1 dar.

Nach der Figur ist eine bipolare Platte 2 (Interkonnektorplatte aus CrFe5Y₂O₃1) mit einer Anzahl vom Betriebsmittel-Kanälen 4 versehen, die senkrecht zur Papierebene verlaufen. Diese Kanäle 4 werden mit einem Brenngas, wie Wasserstoff, Erdgas oder Methan, beschickt. Der untere Teil der Hochtemperatur-Brennstoffzelle 1 stellt die Anodenseite dar. Die Oberfläche 6 der bipolaren Platte 2 ist mit einer dünnen Nickelschicht 8 versehen. Die Dicke d dieser Nickelschicht 8 beträgt etwa 20 µm. Auf der Nickelschicht 8 ist ein Nickelnetz 10 durch Punktschweißen elektrisch leitend befestigt. Das Nickelnetz 10 ist hier ein Nickelnetzpaket, bestehend aus einem groben, dickeren Nickel-Tragnetz lOa und einem feinen, dünneren Nickel-Kontaktnetz lOb. An dieses Nickelnetz 10 grenzt über eine dünne Anode 11 ein Feststoff-Elektrolyt 12 an. Dieser Elektrolyt 12 wird nach oben von der Kathode 14 begrenzt. An die Kathode 14 schließt sich über eine Kontaktschicht eine weitere bipolare Platte 16 mit einer Anzahl von Betriebsmittel-Kanälen 18, von denen nur einer gezeigt ist, an. Die Betriebsmittel-Kanäle 18 verlaufen parallel zur Papierebene. Sie führen im Betrieb Sauerstoff oder Luft.

Die Einheit bestehend aus Kathode 14, Festkörper-Elektrolyt 12 und Anode 11 wird als Elektrolyt-Elektronen-Einheit (MEA) bezeichnet.

Die in der Figur gezeigte Nickelschicht 8 verhindert die Bildung einer Chromoxid-Schicht zwischen der bipolaren Platte 2 und dem Nickelnetz 10 und sorgt damit für eine gleichbleibend gute elektrische Leitfähigkeit der Kontakte. Die Brennstoffzelle besitzt also einen geringen Serienwiderstand, der sich im Laufe der Betriebsdauer nicht erhöht.

Mehrere solcher Brennstoffzellen können zu einem "Stack" oder Brennstoffzellen-Stapel zusammengefaßt werden.

## Patentansprüche

1. Hochtemperatur-Brennstoffzelle mit einer bipolaren Platte (2) aus CrFe5Y₂O₃1, die auf der Brenngasseite mit einer Nickelschicht (8) versehen ist, bei der zwischen der bipolaren Platte (2) auf der Brenngasseite und einem Feststoff-Elektrolyten (12) ein Nickelnetz (10) mittels eines Punktschweißverfahrens elektrisch leitend auf der Nickelschicht (8) befestigt ist.

2. Hochtemperatur-Brennstoffzelle nach Anspruch 1,
**dadurch gekennzeichnet, dass** die Nickelschicht (8) chemisch oder galvanisch auf der pipolaren Platte (2) aufgetragen ist.

3. Hochtemperatur-Brennstoffzelle nach Anspruch 1 oder 2,
**dadurch gekennzeichnet, daß** die Dicke (d) der Nickelschicht (8) etwa 20 um beträgt.

4. Hochtemperatur-Brennstoffzellenstapel, der eine Vielzahl übereinander angeordneter Verbundleiterplatten (2, 16) mit dazwischen liegendem Elektrolyten (12) aufweist, wobei jeweils zwei benachbarte Verbundleiterplatten (2, 16) eine Hochtemperatur-Brennstoffzelle nach einem der Ansprüche 1 bis 3 bilden.

## Claims

1. High-temperature fuel cell with a bipolar plate (2) made from CrFe5Y₂O₃1, the fuel-gas side of which has been provided with a nickel layer (8), in which, between the bipolar plate (2) on the fuel-gas side and a solid electrolyte (12), a nickel grid (10) has been secured in an electrically conducting manner on the nickel layer (8) by means of a spot welding process.

2. High-temperature fuel cell according to Claim 1,
**characterized in that** a chemical or electroplating method has been used to apply the nickel layer (8) to the bipolar plate (2).

3. High-temperature fuel cell according to Claim 1 or 2,
**characterized in that** the thickness (d) of the nickel layer (8) is about 20 µm.

4. Stack of high-temperature fuel cells which has a large number of connector plates (2, 16) arranged one on top of the other with an electrolyte (12) situated therebetween, where each two adjacent connector plates (2, 16) form a high-temperature fuel cell according to any of Claims 1 to 3.

## Revendications

1. Pile à combustible à haute température, ayant une plaque de bi-polaire en CrFe5Y₂O₃I, qui est munie du côté du gaz combustible d'une couche (8) de nickel, dans laquelle il est fixé à la couche (8) de nickel d'une manière conductrice de l'électricité, au moyen d'un procédé de soudure par point, un réseau (10) de nickel entre la plaque (2) bipolaire du côté du gaz combustible et un électrolyte (12) solide.

2. Pile à combustible à haute température suivant la revendication 1, **caractérisée en ce que** la couche (8) de nickel est déposée par voie chimique ou par électrolyse sur la plaque (2) bipolaire.

3. Pile à combustible à haute température suivant la revendication 1 ou 2 **caractérisée en ce que** l'épaisseur (d) de la couche (8) de nickel est d'environ 20 µm.

4. Empilement de piles à combustible à haute température qui comprend une pluralité de plaques (2.16) conductrices d'interconnexion superposées, ayant entre elles de l'électrolyte (12), deux plaques (2.16) conductrices d'interconnexion voisines respectives formant une pile à combustible à haute température suivant l'une des revendications 1 à 3.
